**Europäisches Patentamt**

**European Patent Office**

**Office européen des brevets**

(19)

(11) Publication number: **0 169 687**

**A1**

(12)

# EUROPEAN PATENT APPLICATION

(21) Application number: **85304934.4**

(22) Date of filing: **10.07.85**

(51) Int. Cl.⁴: **A 01 G 31/02**

(30) Priority: **10.07.84 JP 103880/84 U**
**10.07.84 JP 103884/84 U**
**11.07.84 JP 104632/84 U**
**31.10.84 JP 165375/84 U**
**22.05.85 JP 75052/85 U**

(43) Date of publication of application:
**29.01.86 Bulletin 86/5**

(84) Designated Contracting States:
**AT BE CH DE FR GB IT LI LU NL SE**

(71) Applicant: **Kabushiki Kaisha Seiwa**
**6-1, Hatchobori 1-chome Chuo-ku**
**Tokyo(JP)**

(72) Inventor: **Iwamoto, Tsuneo**
**6-1, Hatchobori 1-chome Chuo-ku**
**Tokyo(KP)**

(72) Inventor: **Yukizane, Mikio**
**6-1, Hatchobori 1-chome Chuo-ku**
**Tokyo(JP)**

(74) Representative: **Luckhurst, Anthony Henry**
**William et al,**
**STANLEY, POPPLEWELL, POOLE 57 Lincoln's Inn Fields**
**London WC2A 3LS(GB)**

(54) **Cultivation bed.**

(57) The cultivation bed includes a water-permeable sheet member (22) for covering a culture medium member (20), a spacer member (24) arranged opposite to the sheet member to the culture medium member, a cover member (26) for water-tightly covering the sheet member amd spacer member and drainage pipes (28) provided to longitudinally extend along the cover member.

EP 0 169 687 A1

./...

Croydon Printing Company Ltd.

FIG. 1

CULTIVATION BED

## BACKGROUND OF THE INVENTION

### Field of the Invention

This invention relates to a cultivation bed for artificially cultivating a plant, and more particularly to such a cultivation bed adapted to feed culture solution to a culture medium to artificially cultivate or grow a plant in agriculture, gardening and the like.

### Description of the Prior Art

A conventional cultivation bed of one type which is adapted to feed culture solution to a culture medium to cultivate or grow a plant is constructed in a manner such that culture solution is filled in a bed vessel of a box-like shape or groove-like shape to a predetermined liquid level in a flow state or stationary state, so that the root of a plant may be immersed in the culture solution. Another conventional cultivation bed of the one type has been proposed which is adapted to immerse a block-like culture medium having a plant permanently set thereon in culture solution. Such cultivation beds as described above are used for hydroponic cultivation.

A conventional cultivation bed of the other type has been also proposed which is adapted to continuously and intermittently feed culture solution to a block-like culture medium while the culture solution is allowed to be discharged therefrom in an ordinary state, to thereby hold culture solution in the culture medium. The cultivation bed is used for culture solution holding cultivation.

In general, the culture solution-holding capacity of a culture medium is varied depending upon the material and density of the culture medium. However, there is not a significant difference in maximum culture solution-holding capacity between the individual culture mediums throughout the overall cultivation term.

In general, it is required to feed culture solution to a culture medium in a somewhat large amount at the initial growing stage of a plant in order to promote the rooting of the plant. At the subsequent growing stage after the rooting, it is required to decrease the supply of culture solution to increase a possibility of contacting the root of the plant with air and adjust the balance between the supply of culture solution to the culture medium and the contacting of the root with air.

In this regard, in the hydroponic cultivation, the root of a plant is constantly immersed in culture solution, so that the plant falls into an excessive nutrition state to fail in complete growth. Also, the hydroponic cultivation fails to fully contact the root of a plant with air to cause incomplete growth of the plant. Further, the practising of the hydroponic cultivation under the conditions that culture solution continuously or intermittently flows incurs waste of much culture solution.

On the contrary, the culture solution-holding cultivation has an advantage of eliminating the above described excessive nutrition state and oxygen deficiency encountered with the hydroponic cultivation, because it allows the root of a plant to be contacted with air. Nevertheless, the culture solution-holding cultivation has the following important disadvantages.

One of the disadvantages is that the employment of a culture medium having low culture solution holding capacity causes a time during which a suitable amount of culture solution required to grow a plant is held in the culture medium to be substantially shortened. Accordingly, the intermittent supply of culture solution to the culture medium causes the abnormal drying of the culture medium due to the lack of culture medium. In particular, an infant plant readily withers when the abnormal drying of the culture medium occurs at the initial growing stage.

Further, a failure in supply of culture solution sufficient to carry out the rooting of a plant adversely affects the plant at the subsequent growing stage. On the contrary, the continuous supply of culture solution to the culture medium eliminates the abnormal drying of the culture medium and the lack of culture solution described above but prevents the economical practising of the cultivation due to an increase in wasted culture solution.

In order to eliminate such problem as described above, the use of a culture medium having high culture solution holding capacity has been often proposed. The intermittent supply of culture solution to such a culture medium allows the culture solution to be economically used. However, the culture medium is inferior in air-permeability, thus to incur a deficiency of air required at the growing stage after the rooting of a plant.

Accordingly, it is highly desirable to develop a cultivation bed for artificially cultivating a plant which is adapted to use a culture medium essentially having satisfactory air-permeability and low culture solution-holding capacity and is capable of carrying out the supply of culture solution to a culture medium beyond the culture solution-holding capacity at the initial growing stage of a plant before the rooting, adjusting the balance between the supply rate of culture solution to a culture medium and the ventilation of the culture medium in view of the growing state and the cultivation environment such as a variation in season, day cycle and the like, substantially decreasing culture solution wasted without being used to carry out the economical practicing of cultivation, and being effectively applied to all kinds of hothouse and outdoor fields different in scale, shape and the like.

Accordingly, it is an object of the present invention to provide a cultivation bed for artificially cultivating a plant which is capable of carrying out the supply of culture solution to a culture medium member beyond the culture solution-holding capacity of the culture medium member at the initial stage of a plant before the rooting.

It is another object of the present invention to provide a cultivation bed for automatically cultivating a plant which is capable of effectively adjusting the balance between the supply rate of culture solution to a culture medium member and the ventilation of the culture medium member in view of the growing state and the growing environment such as a variation in season, day cycle and the like.

It is a further object of the present invention to provide a cultivation bed for artificially cultivating a plant which is capable of substantially decreasing culture solution wasted without being used, to allow the cultivation to be economically practiced.

It is a still further object of the present invention to provide a cultivation bed for artificially cultivating a plant which is capable of being effectively applied to all kinds of hothouse and outdoor fields different in scale, shape and the like.

It is still another object of the present invention to provide a cultivation bed for artificially cultivating a plant which is capable of carrying out the above-described objects with a simple structure.

Still other objects of the present invention will in part be obvious and will in part be apparent from the specification.

## SUMMARY OF THE INVENTION

Generally speaking, in accordance with the present invention, a cultivation bed for artificially cultivating a plant which comprises a culture medium member adapted to grow the plant thereon, the culture medium member being supplied with culture solution; a water-permeable sheet member for covering at least the bottom surface of the culture medium member; a spacer member arranged to be opposite through the water-permeable sheet member to the bottom surface of the culture medium member; a cover member for water-tightly covering substantially the whole of the culture medium member, water-permeable sheet member and spacer member except a part of the upper surface of the culture medium member which is used to cultivate the plant thereon; and at least one drainage pipe arranged adjacent to the bottom of the cover member to longitudinally extend along the outer surface of the cover member.

In a preferred embodiment of the present invention, the water-permeable sheet member comprises a nonwoven sheet formed of a fiber material having density sufficient to prevent the penetration by the root of the plant.

In a preferred embodiment of the present invention, the spacer member comprises a flexible plastics sheet having a plurality of projections expanded with air formed thereon at suitable intervals.

In a preferred embodiment of the present invention, the cover member is formed of a flexible light-screening plastics sheet material.

In a preferred embodiment of the present invention, the drainage pipe is formed integral with the cover member by outward expanding a part of the cover member into a pipe-like shape in the longitudinal direction thereof and closing the constriction of the expanded part of the cover member every suitable interval to intermittently form non-closed hole portions along the longitudinal direction thereof, the drainage pipe being communicated through the hole portions with the inside of the cover member.

- 6 -

In a preferred embodiment of the present invention, the nonwoven sheet member is formed of a fiber material of which each adjacent two fiber elements have a maximum interval of 50 µm or less defined therebetween.

In a preferred embodiment of the present invention, the spacer member comprises a rigid corrugated plate.

In a preferred embodiment of the present invention, the culture medium member is formed of a rock wool material into a rectangular shape in section.

In a preferred embodiment of the present invention, the drainage pipe is provided with a flow control valve to allow culture solution to be stored in the cover member at a desired level.

In accordance with a further aspect of the present invention, a cultivation bed for artificially cultivating a plant comprises a culture medium member adapted to grow the plant thereon, the culture medium member being supplied with culture solution; a water-permeable sheet member for covering at least the bottom of the culture medium member, the water-permeable sheet member comprising a nonwoven sheet formed of a fiber material having density sufficient to prevent the penetration by the root of the plant; a spacer member arranged to be opposite through the water-permeable sheet member to the bottom surface of the culture medium member, the spacer member comprising a flexible plastic sheet having a plurality of projections expanded with air formed thereon at suitable intervals; a cover member for water-tightly covering substantially the whole of the culture medium member, water-permeable sheet member and spacer member except a part of the upper surface of the culture medium member which is used to cultivate the plant thereon, the cover member being formed of a flexible light-screening plastic sheet material; and at least one drainage pipe arranged adjacent to the bottom of the cover member to longitudinally extend along the outer surface of the cover member, the drainage pipe being formed integral with the cover member by outward expanding a part of the cover member into a pipe-like shape in the longitudinal direction thereof and closing the constriction of the expanded part of the cover member every suitable interval to intermittently form non-closed hole portions along the longitudinal direction thereof and being communicated through the hole portions with the inside of the cover member.

Further, in accordance with the present invention, a cultivation bed for artificially cultivating a plant comprises  a culture medium member adapted to grow the plant thereon, the culture medium member being supplied with culture solution; a water-permeable sheet member for covering at least the bottom of the culture medium member, the water-permeable sheet member comprising a nonwoven sheet formed of a fiber material having density sufficient to prevent the penetration by the root of the plant; a spacer member arranged to be opposite through the water-permeable sheet member to the bottom surface of the culture medium member, the spacer member comprising a rigid corrugated plate; a cover member for water-tightly covering substantially the whole of the culture medium member, water-permeable sheet member and spacer member except a part of the upper surface of the culture medium member which is used to cultivate the plant thereon, the cover member being formed of a flexible light-screening plastic sheet material; and at least one drainage pipe arranged adjacent to the bottom of the cover member to longitudinally extend along the outer surface of the cover member, the drainage pipe being formed integral with the cover member by outward expanding a part of the cover member into a pipe-like shape in the longitudinal direction thereof and closing the constriction of the expanded part of the cover member every suitable interval to intermittently form non-closed hole portions along the longitudinal direction thereof and being communicated through the hole portions with the inside of the cover member.

The invention includes the features of construction, combination of elements, and arrangements of parts which will be exemplified in the construction hereinafter set forth, and the scope of the invention will be indicated in the claims.

## BRIEF DESCRIPTION OF THE DRAWINGS

For a fuller understanding of the invention, reference is had to the following description taken in connection with the accompanying drawings in which like reference numerals designate like parts throughout, wherein:

Fig. 1 is a perspective view schematically illustrating an embodiment of a cultivation bed according to the present invention and showing one example of the manner of use of a cultivation bed of the present invention;

Fig. 2 is an enlarged vertical sectional view taken along line II-II of Fig. 1;

Fig. 3 is an enlarged plan view showing a part of the cultivation bed of Fig. 1;

Fig. 4 is a partly broken perspective view showing one form of a spacer member used in the cultivation bed shown in Fig. 1;

Fig. 5 is a partly broken perspective view showing a modification of a spacer member;

Fig. 6 is a vertical sectional view taken along line VI-VI of Fig. 2; and

Fig. 7 is a side elevation view showing a liquid level adjusting mechanism.

## DETAILED DESCRIPTION OF THE PREFERRED EMBODIMENT

Now, a cultivation bed for artificially cultivating a plant according to the present invention will be described hereinafter with reference to the accompanying drawings.

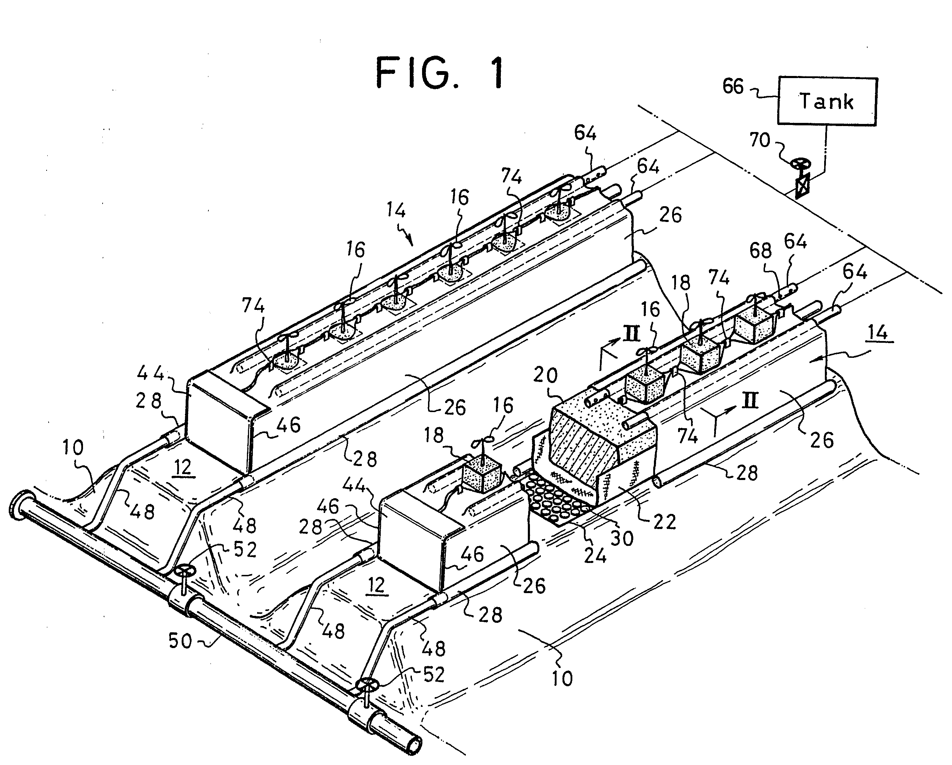

Fig. 1 illustrates one example of the manner of use of a cultivation bed according to the present invention as well as schematically showing an embodiment of a cultivation bed of the present invention. In Fig. 1, reference numeral 10 designates ridges of a suitable length formed on a hothouse field, an outdoor field or the like. The ridges 10 each have a flat top surface horizontally formed thereon, on which an embodiment of a cultivation bed according to the present invention generally indicated by reference numeral 14 is arranged. One of the cultivation beds 14 has plants 16 directly set thereon and the other cultivation bed 14 has plants 16 which were previously germinated on seedling raising culture mediums 18 and tranplanted thereon together with the culture mediums 18 for the purpose of the growing thereon.

Generally speaking, the cultivation bed 14 of the illustrated embodiment comprises a culture medium member 20 formed of a rock wool material into a rectangular shape in section such as a rectangular parallelopiped shape, a cubic shape or the like, a nonwoven sheet member 22 formed of a suitable material to have density sufficient to prevent the root of a plant from penetrating the sheet member 22 and arranged to cover at least the lower surface of the culture medium member 20, a sheet-like spacer member 24 arranged below the culture medium member 20 through the nonwoven sheet member 22 and having unevenness or a plurality of projections formed on the upper surface thereof, a flexible cover member 26 formed of a light-screening plastics material which is adapted to water-tightly cover the culture medium member 20, water-permeable nonwoven sheet member 22 and spacer member 24, and at least one drainage pipe 28 arranged adjacent to the bottom edge of the cover member 26 to extend in the longitudinal direction of the cover member 26 which pipe serves to collect extra culture solution and discharge it therethrough to the exterior.

The culture medium member 20, in the illustrated embodiment, is formed of a rock wool material having somewhat low density so that it may have culture solution-holding capacity of 40 to 60% based on the volume ratio after the discharge of extra culture solution, to thereby ensure satisfactory air-permeability. The culture medium member 20 may be formed of other inorganic fiber material such as glass wool or the like, an organic fiber material, a water-absoptive expanded urethane foam material, a mat formed of a man-made fiber material, a charcoal block, a sand block or the like. In the illustrated embodiment, the culture medium member 20 is formed into a rectangular shape in section such as a rectangular parallelopiped shape, a cubic shape or the like.

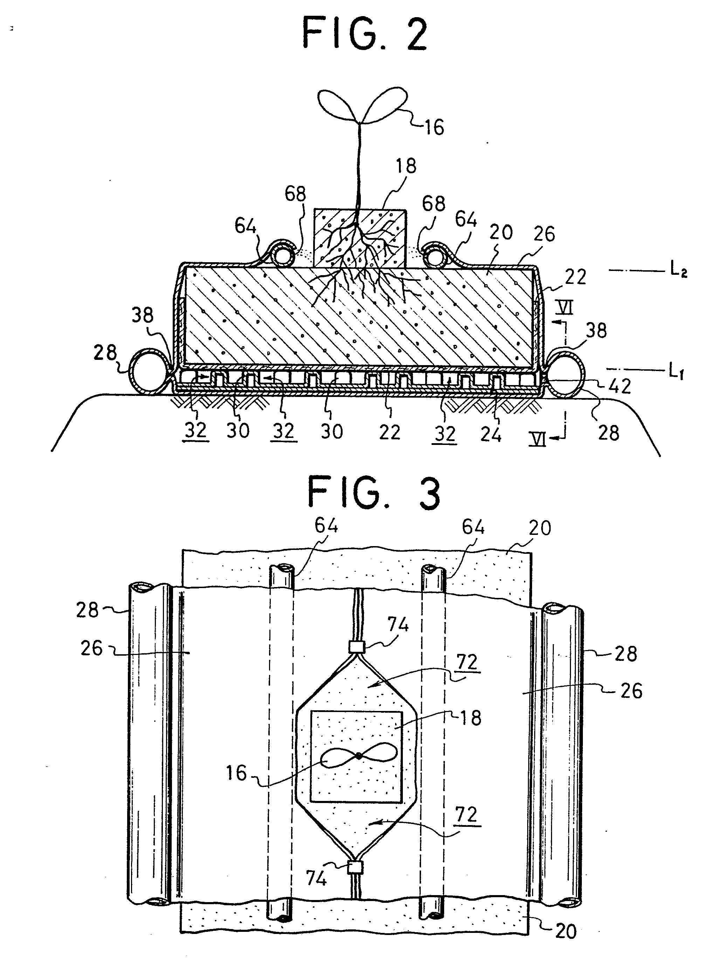

The nonwoven sheet member 22 is provided to cover the bottom surface and a part of both side surfaces of the culture medium member 20 therewith, as shown in Fig. 2. The nonwoven sheet member 22 serves to freely pass extra culture solution therethrough and prevent the root of a plant from penetrating the sheet member 22 to ensure the growth of the root only within the sheet member 22. The nonwoven sheet member 22 may be arranged to cover only the bottom surface of the culture medium member 20 or the whole surface of the culture medium member 20 except a part of the upper surface thereof as long as such purposes are effectively accomplished.

In the illustrated embodiment, the nonwoven sheet member 22 is formed of a fiber material of which each adjacent two fiber elements have a maximum interval of 55 $\mu$m or less defined therebetween.

The spacer member 24 is arranged in a manner such that the upper surface thereof having a plurality of projections 30 formed thereon is opposite through the nonwoven sheet member 22 to the lower surface of the culture medium member 20. Such construction, as shown in Fig. 2, allows a plurality of spaces 32 to be defined through the projections 30 between the upper surface of the spacer member 24 and the lower surface of the culture medium member 20, through which extra culture solution which has passed

- 12 -                                    0169687

through the nonwoven sheet member 22 is guided to the drainage pipe 28. The spaces 32 also serve as an air passage when there is no extra culture solution to flow therethrough.

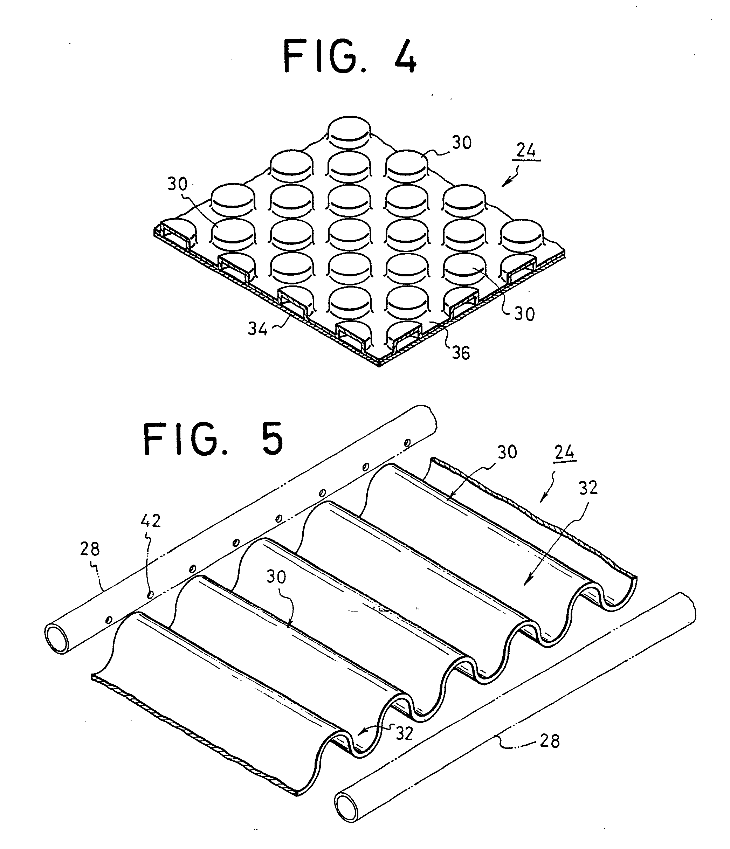

The spacer member 24 may be constructed in such a manner as shown in Fig. 4. A spacer member 24 shown in Fig. 4 is formed of two flexible water-permeable plastic sheets 34 and 36 superposed together, between which a plurality of spaces filled with air are formed at suitable intervals so as to serve as a plurality of expanded projections 30. Sheets 34 and 36 may be water-impermeable.

Fig. 5 shows a modification of the spacer member 24. A spacer member 24 shown in Fig. 5 comprises a corrugated plate formed of a rigid plastics material of which the crest portions act as expanded projections 30 and the trough portions serve as spaces 32.

However, the spacer member 24 is not limited to those shown in Figs. 4 and 5. For example, it may comprise a sheet, mat or plate-like material as long as it allows extra culture solution and air to flow below the nonwoven sheet member 22.

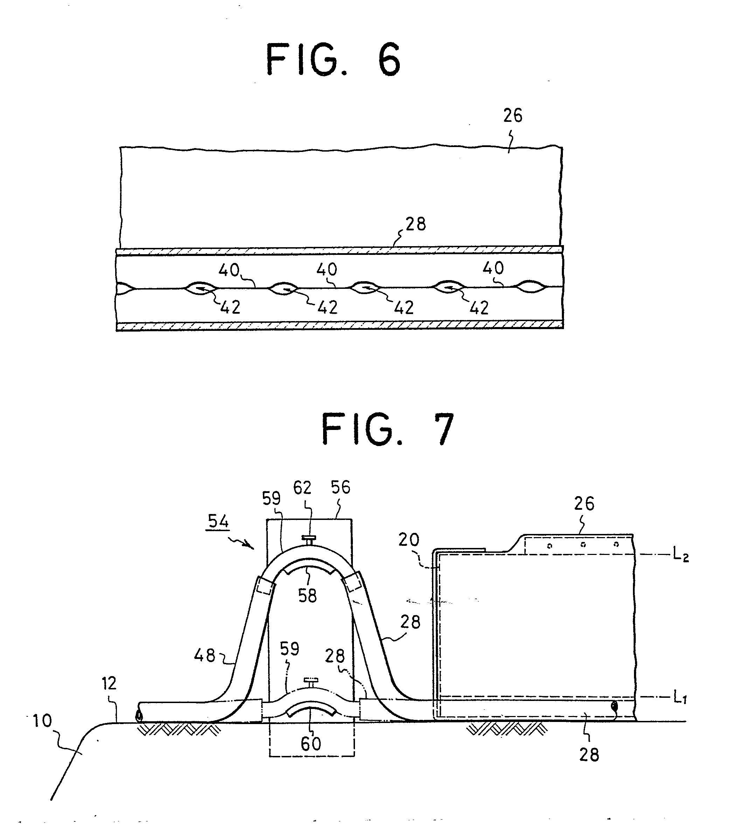

The cover member 26, in the illustrated embodiment, is formed of a single elongate plastics sheet. The cover member 26, as shown in Figs. 1 and 2, is expanded at the lower portion of each of both sides thereof into a tube-like shape along the longitudinal direction thereof to form a pair of the drainage pipes 28 extending in the longitudinal direction of the cover member 26. The constriction of each of the drainage pipes 28, as shown in Fig. 6, is intermittently closed by adhesion at suitable intervals in the longitudinal direction to alternately form adhesion portions 40 and non-adhesion hole portions 42 in a row. Thus, in the illustrated embodiment, the drainage pipes 28 are formed of a plastics sheet material for the cover member 26 so as to be integral with the cover member 26 and communicated through the hole portions 42 with the inside of the cover member 26. In the illustrated embodiment, the drainage pipe 28 is provided on each of both sides of the culture medium member 20. However, it may be arranged on any one of both sides thereof. Also, the drainage pipe 28 may be formed of a suitable material such as polyvinyl chloride separate from that for the cover member 26 to have hole portions 42 at suitable intervals. Such a drainage pipe may be connected to the cover member 26 by adhesion.

The cover member 26, as shown in Fig. 1, is upward bent at both ends 44 thereof to cover both ends of the culture medium member 20, and each of the both ends 44 of the cover member 26 is bonded at both side edges 46 thereof to both side surfaces of the cover member 26 to provide the cover member 26 with water-tightness.

The drainage pipes 28 constructed in the manner described above each are connected at one end thereof through a connecting pipe 48 to a common discharge pipe 50 and closed at the other end thereof. However, the other end of the drainage pipe 28 may be connected through a like connecting pipe to a like common discharge pipe.

The common discharge pipe 50 may be provided with a flow control valve 52. The flow control valve 52 is adapted to be operated or adjusted to set the level of culture solution in the cover member 26 between a lowermost liquid level L1 shown in Fig. 2 or the height of the lower surface of the culture medium member 20 and an uppermost liquid level L2 shown in Fig. 2 or the height of the upper surface of the culture medium member to store culture solution in the cover member 26 at a desired level and discharge extra culture solution exceeding a desired liquid level through the discharge pipe 50 to the exterior.

The level of culture solution in the cover member 26 may be controlled by means of a liquid level-adjusting mechanism generally designated by reference numeral 54 in Fig. 7, which is adapted to carry out adjustment of the liquid level without using the flow control valve 52 described above or in cooperation therewith. The liquid level-adjusting mechanism 54 comprises a base 56 mounted on the ridge 10, an upper hook member 58 securely mounted on the upper portion of the side surface of the base 56 at the position of the uppermost liquid level L2, a lower hook member 60 fixedly mounted on the lower portion of the side surface of the base 56 at the position of the lowermost liquid level L1, and an auxiliary rigid pipe 59 detachably held through one of the upper and lower hook members 58 and 60 on the base 56. The auxiliary rigid pipe 59 is connected at one end thereof to the drainage pipe 28 which is preferably formed of a flexible material and at the other end thereof to the connecting pipe 48 which is also preferably formed of a flexible material.

In the liquid level-adjusting mechanism 54 constructed as described above, when the auxiliary pipe 59 is held on the upper hook member 58 as indicated by solid lines in Fig. 7 and culture solution is supplied to the culture medium member 20 beyond the culture solution-holding capacity of the culture medium member 20, the portion of culture solution fed beyond the capacity of the culture medium member 20 is received in the cover member 26 beyond the uppermost liquid level L2 to cause extra culture solution above the liquid level L2 to be discharged through the liquid level adjusting mechanism 58 to the exterior. On the contrary, when the auxiliary pipe 59 is removed from the upper hook member 58 and then held on the lower hook member 60 to be positioned at the lowermost liquid level L1 as indicated by phantom lines in Fig. 7, culture solution fed to the culture medium member 20 is absorbed by the culture medium member 20 within a range of the culture solution holding capacity thereof, and the portion of culture solution fed beyond the capacity of the culture medium member is stored in the cover member 26 at the lowermost

liquid level L1, to thereby cause the spacer member 24 and the portion of the nonwoven sheet member 22 below the liquid level L1 to be immersed in the culture solution. Extra culture solution beyond the lowermost liquid level L1 is discharged through the mechanism 54 to the exterior.

The auxiliary pipe 59, as shown in Fig. 7, is preferably provided with a vent valve 62 to prevent excessive discharge of culture solution due to a Torricellian phenomenon. It is of course the case that when the auxiliary pipe 59 is removed from the hook member 58 or 60 and then placed on the ridge 10 in a flat state, the level of culture solution is below the lowermost liquid level L1 to cause all culture solution except that held in the culture medium member 20 to be discharged through the drainage pipe 28, auxiliary pipe 59 and connecting pipe 48 to the exterior.

The cultivation bed 14 of the illustrated embodiment also includes a pair of culture solution feed pipes 64 arranged on the upper surface of the culture medium member 20 to extend in the longitudinal direction of the cultivation bed 14 and covered at the upper portion thereof with the cover member 26. The culture solution feed pipes 64 each are connected at one end thereof to a culture solution tank 66 and closed at the other end thereof. Each of the culture solution feed pipe 64 is formed with a plurality of sprinkler nozzles 68, which are arranged in a row in the longitudinal direction of the pipe 64. Pressure under which culture solution is sprinkled from the nozzles 68 onto the culture medium member 20 may be obtained by arranging the culture solution tank 66 at a high position or providing a suitable pump means (not shown) in position. Designated by reference numeral 70 in Fig. 1 is a valve connected to the tank 66 for adjusting the supply rate of culture solution.

Now, the manner of use of the cultivation bed constructed in the manner as described above will be hereinafter described with reference to the drawings.

In general, the root of an infant plant at the initial growing stage is immature, thus, it is required to feed culture solution to the culture medium member 20 in an amount beyond the culture solution holding capacity of the culture medium member 20 so that an infant plant may carry out the rooting sufficient to ensure the subsequent sound growth.

In view of the foregoing, in the cultivation bed of the illustrated embodiment, when a plant set on the culture medium member 20 is at the initial growing stage or it has been just set on the culture medium member 20, culture solution is sprinkled from the nozzles 68 onto the culture medium member 20 while the flow control valve 52 is closed or the auxiliary pipe 59 is held at the position indicated by the solid lines in Fig. 7, so that it may be fully absorbed in the culture medium member and stored in the cover member 26 at the uppermost liquid level L2. This results in the root of a plant directly transplanted on the culture medium member 20 being in the same state as that of being immersed in culture solution. Whereas, when a plant is transplanted through the seedling raising culture medium 18 onto the culture medium member 20, culture medium is sucked up through the culture medium member 20 to the culture medium 18 to cause the culture medium 18 to be filled with plenty of culture solution. When a part of culture solution in the cover member 26 is lost due to the absorption by a plant and/or the natural vaporization, the supplementation is carried out. Thus, it will be noted that the cultivation bed of the illustrated embodiment effectively prevents the lack of culture solution at the initial growing stage, so that satisfactory rooting of a plant may be positively promoted.

Then, at the growing stage after the rooting, it is required to prevent the excessive supply of culture solution to the culture medium member and carry out the supply of air or oxygen to the culture medium member due to the ventilation. In this instance, it is desirable that such requirements are satisfied in a manner to allow the ventilation of the culture medium member to be carried out under the conditions that a suitable amount of culture solution is uniformly kept throughout the overall length of the culture medium member 20.

The cultivation bed of the illustrated embodiment realizes such cultivation environment in view of the growing state of a plant, a variation in season and day cycle according to any one of the following operations (a) to (c).

(a) Culture solution is sprinkled from the sprinkler nozzles 68 onto the culture medium member 20 in the state that the flow control valve 52 is closed or the auxiliary pipe 59 is held at the position indicated by the solid lines in Fig. 7, so that culture solution may be fully absorbed in the culture medium member 20 and filled and stored in the cover member 26 to the uppermost liquid level L2. Subsequently, the flow control valve 52 is opened or the auxiliary pipe 59 is lowered from the upper hook member 58 to a desired lower position in a predetermined period of time, so that culture solution may be discharged to lower the level of culture solution to a desired one below the uppermost liquid level L2. Such culture solution feed and discharge modes are alternately repeated every predetermined period of time.

(b) The flow control valve 52 is opened or the auxiliary pipe 59 is lowered from the upper hook member 58 to the lower hook member 60 while successively feeding culture solution to the culture medium member 20 by sprinkling, so that extra culture solution may be discharged while culture solution in the cover member 26 is kept at a desired level below the uppermost liquid level L2.

0169687

- 18 -

(c) A combination of (a) and (b) described above.

The cultivation bed of the illustrated embodiment, as described above, is adapted to prevent the clogging of the nonwoven sheet member 22 due to the penetration by the root of a plant to keep the water-permeability of the culture medium member 20 satisfied and uniform over the whole length thereof. Also, the cultivation bed of the illustrated embodiment effectively prevents the root of a plant from penetrating the spaces 32, the non-adhesion hole portions 42 of the drainage pipe 30, and the drainage pipe 30; accordingly, the discharge of extra culture solution in the above-described discharge mode can be effectively and smoothly carried out over the whole length of the cover member 26. Thus, it will be noted that the cultivation bed of the illustrated embodiment positively ensures the uniform supply of a desired amount of culture solution and air at the growing stage after the rooting of a plant, because the culture medium member 20 is effectively prevented from being subjected to local abnormal drying and non-uniformly holding culture medium therein.

Further, the operations (a), (b) and (c) described above exhibit the following advantages.

One of the advantages is that the lowering of level of culture solution stored in the cover member 26 below the uppermost liquid level L2 in the culture solution discharge mode causes culture solution received in the spaces 32 of the spacer member 24 to be discharged therefrom and air to be substitutionally filled in the spaces 32, which is then fed through the nonwoven sheet member 22 to the culture medium member 20 due to the air-permeability of the member 20; thus, air is upward fed from the spaces 32 to the culture medium member 20 as well as it is downward fed to the culture medium member 20 through openings 72 provided at the upper surface of the cover member 26 through which the seedling raising culture mediums 18 are arranged on the upper surface of the culture medium member 20. Such upward feeding of air forms cultivation environment particularly useful to the growth or cultivation of a plant, because the absorption of air by a plant is mainly carried out through the root hair thereof.

Another advantage is that the lowering of level of culture solution in the cover member 26 to the lowermost liquid level L1 causes the spacer member 24 and the portion of the nonwoven sheet member 22 below the culture medium member 20 to be immersed in the culture solution; accordingly, when culture solution absorbed in the culture medium member 20 is decreased, a part of culture solution stored in the cover member 26 is supplementarily sucked up through the nonwoven sheet member 22 to the culture medium member 20. Thus, even when the culture medium member 20 has low culture medium holding capacity, the uniform and successive supply of a desired amount of culture solution to the culture medium member is ensured to prevent the withering of a plant due to the abnormal drying of the culture medium member 20 and accomplish the saving of culture solution.

In the illustrated embodiment, the cover member 26 is formed of a black plastics sheet material for the purpose of light-screening to prevent the deterioration of culture solution in the cover member 26 and the generation of algae such as chlorella and the like in the cultivation bed. Such construction prevents the composition of culture solution in the cover member 26 from being changed to allow culture solution to be stably stored in the cover member 26 for a long period of time. Also, this, as described above, prevents the adhesion of algae onto the surface of the culture medium member 20, to thereby satisfactorily ensure the absorption of culture solution by the culture medium member and the air-permeability of the culture medium member. Further, in the illustrated embodiment, when plants 16 are transplanted together with the seedling raising culture mediums 18, both edges of the cover member 26 between each adjacent two culture mediums 18 can be closed together by a clip 74 to prevent the excessive vaporization of culture solution from the upper surface of the culture medium member 20. Accordingly, the transplanting of additional plants can be readily accomplished on the unused areas of the upper surface of the culture medium member 20 only by removing the clips 74.

As can be seen from the foregoing, the cultivation bed of the present invention establishes the desired balance between the supply of culture solution to the culture medium member and the ventilation of the culture medium member depending upon the growing state of a plant to be cultivated thereon to effectively provide satisfied cultivation environment suitable for each of the respective growing stages throughout the cultivation bed. Also, the present invention can utilize culture solution with high efficiency to promote the saving of culture solution. Further, the cultivation bed of the present invention is effectively applied to all kinds of hothouse and outdoor fields different in scale, shape and the like and provides sanitary cultivation environment because the scattering of culture solution is prevented.

It will thus be seen that the objects set forth above, among those made apparent from the preceding description, are efficiently attained and, since certain changes may be made in the above construction without departing from the scope of the invention, it is intended that all matter contained in the above description as shown in the accompanying drawings shall be interpreted as illustrative and not in a limiting sense.

It is also to be understood that the following claims are intended to cover all of the generic and specific features of the invention herein described, and all statements of the scope of the invention which, as a matter
of language, might be said to fall therebetween.

0169687

CLAIMS:

1. A cultivation bed for artificially cultivating a plant comprising:

a culture medium member adapted to grow said plant thereon, said culture medium member being adapted to receive a culture solution;

a water-permeable sheet member for covering at least the bottom surface of said culture medium member;

a spacer member arranged externally of said water-permeable sheet member and opposite said bottom surface of said culture medium member;

a cover member for water-tightly covering substantially the whole of said water-permeable sheet member and spacer member except a part of the upper surface of said culture medium member which is used to cultivate a said plant thereon; and

at least one drainage pipe arranged adjacent to the bottom of said cover member to longitudinally extend along the outer surface of said cover member.

2. A cultivation bed as defined in claim 1, wherein said water-permeable sheet member comprises a nonwoven sheet formed of a fiber material and having a density sufficient to prevent the penetration by the root of said plant.

3. A cultivation bed as defined in claim 1, wherein said spacer member comprises a flexible plastics sheet having a plurality of air-filled projections formed thereon at intervals.

4. A cultivation bed as defined in claim 1, wherein said cover member is formed of a flexible light-screening plastics sheet material.

5. A cultivation bed as defined in claim 1 or 4, wherein said drainage pipe is formed integral with said cover member by deformation of a part of said cover member into a pipe-like shape in the longitudinal direction thereof in such a fashion as to longitudinally close said pipe-like shape and intermittently form non-closed hole portions along the longitudinal direction thereof, said drainage pipe communicating via said hole portions with the inside of said cover member.

6. A cultivation bed as defined in claim 1, wherein said non-woven sheet member is formed of a fiber material of which each adjacent two fiber elements have a maximum interval of 50 $\mu$m or less defined therebetween.

7. A cultivation bed as defined in claim 1, wherein said spacer member comprises a rigid corrugated plate.

8. A cultivation bed as defined in claim 1, wherein said culture medium member is formed of a rock wool material and has a rectangular shape in section.

9. A cultivation bed as defined in claim 1 or 5, wherein said drainage pipe is provided with a flow control valve to allow culture solution to be stored in said cover member at a desired level.

10. A cultivation bed for artificially cultivating a plant comprising:

a culture medium member adapted to grow said plant thereon, said culture medium member being adapted to receive culture solution;

a water-permeable sheet member for covering at least the bottom surface of said culture medium member, said water-permeable sheet member comprising a nonwoven sheet formed of a fiber material and having a density sufficient to prevent the penetration by the root of a said plant;

a spacer member arranged to be opposite through said water-permeable sheet member to said bottom surface of said culture medium member, said spacer member comprising a flexible plastic sheet having a plurality of air-filled projections formed thereon at intervals;

a cover member for water-tightly covering substantially the whole of said water-permeable sheet member and spacer member except a part of the upper surface of said culture medium member which is used to cultivate said plant thereon, said cover member being formed of a flexible light-screening plastics sheet material; and

at least one drainage pipe arranged adjacent to the bottom of said cover member to longitudinally extend along the outer surface of said cover member, said drainage pipe being formed integral with said cover member by outward expansion of a part of said cover member into a pipe-like shape in the longitudinal direction thereof and closure of said expanded part of said cover member at intervals to intermittently form non-closed hole portions along the longitudinal direction thereof, said drainage pipe communicating via said hole portions with the inside of said cover member.

11. A cultivation bed for artificially cultivating a plant comprising:

a culture medium member adapted to grow said plant thereon, said culture medium member being supplied with culture solution;

a water-permeable sheet member for covering at least the bottom surface of said culture medium member, said water-permeable sheet member comprising a nonwoven sheet formed of a fiber material and having a density sufficient to prevent penetration by a root of a said plant;

a spacer member arranged to be opposite said bottom surface of said culture medium member, said spacer member comprising a rigid corrugated plate;

a cover member for water-tightly covering substantially the whole of said water-permeable sheet member and spacer member except a part of the upper surface of said culture medium member which is used to cultivate a said plant thereon, said cover member being formed of a flexible light-screening plastics sheet material; and

at least one drainage pipe arranged adjacent to the bottom of said cover member to longitudinally extend along the outer surface of said cover member, said drainage pipe being formed integral with said cover member by outward expanding a part of said cover member into a pipe-like shape in the longitudinal direction

0169687

thereof and closing the constriction of said expanded part of said cover member every suitable interval to intermittently form non-closed hole portions along the longitudinal direction thereof and being communicated through said hole portions with the inside of said cover member.

12. A cultivation bed for artificially cultivating a plant, substantially as hereinbefore described with reference to the accompanying drawings.

13. A plant when cultivated by means of a cultivation bed as claimed in any one of the preceding claims.

14. The features hereinbefore disclosed, or their equivalents, in any novel selection.

# FIG. 1

66 — Tank

70

64

74

16

14

16

74

26

64

64

68

18

74

16

II

16

20

44

28

18

46

74

II

28

26

10

12

16

14

48

44

46

26

26

28

48

52

46

22

28

12

24 30

50

48

28

48

52

10

1|4

0169687

# FIG. 2

# FIG. 3

## FIG. 4

## FIG. 5

# FIG. 6

# FIG. 7

European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 766 684 (KATO)<br>* Figures 1-3; column 2, line 67 - column 4, line 33; claims 1,2,4,5 * | 1,5 | A 01 G 31/02 |
| Y | | 2,4,8, 7,9 | |
| A | | 10,11 | |
| Y | DE-A-2 704 414 (ALBRECHT)<br>* Claims 1,2,4; page 7, lines 1-11; figure 2 * | 2 | |
| A | | 6,10, 11 | |
| Y | US-A-4 166 341 (VESTERGAARD)<br>* Claim 1; figure 1; column 6, line 18 - column 7, line 6 * | 4,8 | TECHNICAL FIELDS SEARCHED (Int. Cl.4)<br><br>A 01 G |
| A | | 1,5,10 ,11 | |
| Y | US-A-2 639 549 (WUBBEN et al.)<br>* Column 2, lines 11-28; figure 1; claim 1 * | 7 | |
| A | | 11 | |
| | ---    -/- | | |

The present search report has been drawn up for all claims

| Place of search | Date of completion of the search | Examiner |
|---|---|---|
| THE HAGUE | 11-10-1985 | MEINDERS H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| Y | FR-A-1 062 712 (CAILLER)<br>* Page 1, right-hand column, line 5 - page 2, left-hand column, line 7; figure 6 * | 9 | |
| A | FR-A-1 540 887 (JEGCO)<br><br>* Figures 1,4,5; claims 1,3-5; page 2, left-hand column, line 58 - page 3, right-hand column, line 6 * | 1,4,5, 10,11 | |
| A | US-A-3 603 034 (MAXWELL-STUART)<br><br>* Column 2, line 7 - column 4, line 24; figures 1,3; claim 1 * | 1,4,5, 8,10, 11 | |
| | ----- | | **TECHNICAL FIELDS SEARCHED (Int. Cl.4)** |

The present search report has been drawn up for all claims

| Place of search | Date of completion of the search | Examiner |
|---|---|---|
| THE HAGUE | 11-10-1985 | MEINDERS H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82